# EUROPÄISCHE PATENTSCHRIFT

(11) **EP 1 242 514 B1**
(45) Veröffentlichungstag und Bekanntmachung des Hinweises auf die Patenterteilung: **26.01.2005**
(21) Anmeldenummer: 01913670.4
(22) Anmeldetag: 16.02.2001
(51) Int. Cl.: C08J 5/22, H01B 1/12, H01M 8/10, H01M 8/02, B01D 69/00

(54) **BRENNSTOFFZELLE**
FUEL CELL
PILE A COMBUSTIBLE

(30) Priorität: 19.02.2000 DE 10007654
(43) Veröffentlichungstag der Anmeldung: 25.09.2002
(73) Patentinhaber: Forschungszentrum Jülich GmbH, 52425 Jülich (DE)
(72) Erfinder: MEISSNER, Dieter, A-4040 Linz (AT); KOHRS, Klaus, 06928 Schweinitz (DE)
(86) Internationale Anmeldenummer: PCT/DE2001/000619
(87) Internationale Veröffentlichungsnummer: WO 2001/060895

(56) Entgegenhaltungen:
- DE-A- 3 431 943
- FR-A- 2 583 066
- US-A- 3 479 267
- US-A- 5 928 488

## Beschreibung

Die Erfindung betrifft eine Membran, insbesondere eine Membran für den Einsatz in einer Brennstoffzelle, sowie eine Brennstoffzelle mit einer solchen Membran.

Eine Brennstoffzelle weist eine Kathode, eine Anode sowie einen zwischen Anode und Kathode befindlichen Elektrolyten auf. An die Anode grenzt ein Anodenraum. An die Kathode grenzt ein Kathodenraum.

Bei einer Methanol-Brennstoffzelle wird Methanol als Arbeitsgas dem Anodenraum zugeleitet. Auf der Kathodenseite wird Sauerstoff oder Luft als Oxidationsmittel zugeführt. Aus dem Methanol bilden sich an der Anode mittels eines Katalysators Wasserstoffionen. Die Wasserstoffionen passieren den Elektrolyten, der typischerweise aus einer Membran besteht, und verbinden sich auf der Kathodenseite mit den vom Oxidationsmittel stammenden Sauerstoffionen zu Wasser. Elektronen werden dabei freigesetzt und es wird elektrische Energie erzeugt.

Aus DE 196 46 487 C2 geht hervor, dass die Elektrolyte bekannter Brennstoffzellen nicht nur die Wasserstoffionen (Protonen) passieren lassen, sondern auch Wasser in Form von Hydrathüllen um die Protonen sowie Teile des Brennstoffes (CH₃OH). Dies bedeutet einerseits, dass zu viel Wasser von der Anode zur Kathode transportiert wird, was sich nachteilig auf die thermische Bilanz auswirkt, andererseits wird zusätzlich auch Methanol transportiert, was im allgemeinen zur Ausbildung eines Mischpotentials an der Kathode und damit zu einer deutlichen Leistungsminderung führt.

Ein Elektrolyt, wie er typischerweise bei der Direkt-Methanol-Brennstoffzelle (DMFC) eingesetzt wird, ist die Kationenaustauschmembran Nafion®. Bei dieser Membran wird ebenfalls neben dem Protonentransport von der Anode zur Kathode auch Methanol und Wasser durch die Membran geschleust. Dadurch kommt es auf der Kathodenseite zu Potentialveränderungen und zur Zerstörung des Katalysators. Des weiteren bewirkt der Methanolverlust eine Senkung der Effizienz der Brennstoffzelle.

Eine Alternative wäre die Verwendung einer Trennschicht aus Anionenaustauscher. Damit könnte das Problem des Methanoltransports durch die Membran grundsätzlich deutlich verringert werden, jedoch unter Inkaufnahme eines höheren ohmschen Widerstandes und höherer Materialkosten. Bislang sind keine dafür geeigneten Materialien bekannt.

Bei herkömmlichen Anionenaustauschern besteht die substituierte Gruppe typischerweise aus einer -NR₃⁺ Gruppe (quartärnäre Stickstoffgruppe mit R = -H oder -Alkyl). Diese Gruppe ist bekanntermaßen selbst nicht sehr stabil, so dass diese Anionenaustauscher bezüglich ihrer Stabilität und ihrer physikalischen Eigenschaften im Vergleich zu entsprechenden Kationenaustauschern nur kurzlebig sind, besonders gegenüber starken Basen und höheren Temperaturen, wie aus "T. A. Davis, J. D. Genders und D. Pletcher, Ion Permeable Membranes, Alresford Press Ltd. 1997, p. 20" hervorgeht.

Aufgabe der Erfindung ist es, eine Brennstoffzelle mit einer temperaturstabilen Membran zu schaffen, welche die oben genannten Nachteile nicht aufweist. Ferner ist es Aufgabe der Erfindung, eine Brennstoffzelle zu schaffen, bei der die Zerstörung der Kathode durch Methanol sowie die Änderung des Potentials an den Elektroden weitgehend verhindert wird.

Die Aufgabe wird gelöst durch eine Brennstoffzelle gemäß Anspruch 1 sowie durch ein Verfahren zum Betreiben einer Brennstoffzelle mit den Merkmalen des Nebenanspruchs. Vorteilhafte Ausführungen der Brennstoffzelle ergeben sich aus dem darauf rückbezogenen Anspruch.

Die erfindungsgemäße Brennstoffzelle nach Anspruch 1 weist eine Membran mit einem Komplexbildner für Kationen auf. Beispielsweise könnte eine solche typische Membran aus einzelnen Polymerketten bestehen, deren Seitenketten die Komplexbildner aufweisen. Eine solche Membran lässt sich z. B. wie folgt durch Verknüpfung von Kronenethern über Phthalocyanineinheiten synthetisieren. Benzo-[18]krone-6 wird in 4,5 Stellung bromiert, mit einem Cyanid zum substituierten Phthalodinitril umgesetzt. Anschließend wird eine Phthalocyaninsynthese durchgeführt.
Ein weiteres Beispiel für eine anspruchsgemäße Brennstoffzelle mit einer vorteilhaften Membran erhält man nach vorgenanntem Syntheseschema, wenn anstelle von Benzo-[18]krone-6 das Dibenzo-[18]krone-6 eingesetzt wird.
Die Membran der erfindungsgemäßen Brennstoffzelle lässt regelmäßig einen Ionentransport von Anionen, insbesondere von O²⁻-Ionen oder Hydroxylionen durch die Membran zu, verhindert aber vorteilhaft einen Kationentransport, insbesondere auch den Transport von größeren Molekülen wie z. B. Methanol.
Die Membran der erfindungsgemäßen Brennstoffzelle ist ferner temperaturstabil und unempfindlich gegenüber Basen. Sie ist vorteilhaft für den Einsatz in einer Brennstoffzelle, insbesondere für eine Methanol-Brennstoffzelle, geeignet, da ihre Funktionsweise durch die dort herrschenden Temperaturen und Millieubedingungen nicht beeinträchtigt wird.

Eine vorteilhafte Ausgestaltung der Membran einer anspruchsgemäßen Brennstoffzelle nach Anspruch 2 weist als Komplexbildner für Kationen mindestens eine Komponente aus der Gruppe der Kryptanden oder kryptatähnlichen Verbindungen auf. Die diesen Gruppen zugrunde liegenden Ringverbindungen sind aus Kohlenstoff oder aus Silikon aufgebaut.
Unter einem Kryptand versteht man einen makropolycyclischen Azapolyether, in dem zwei Brückenkopf-Stickstoff-Atome durch ein oder mehrere O-Atome enthaltende Brücken verbunden sind. Infolge ihres räumlichen Baues vermögen die Kryptanden mit Metall-, insbesondere mit Alkali- und Erdalkaliionen, äußerst stabile Komplexe - die Kryptate - zu bilden.
Als kryptandähnliche Verbindungen sind im Sinne der Erfindung solche Verbindungen zu verstehen, die analog zu den Kronenethern aufgebaut sind, aber auf einer Silikonbasis aufbauen.

Weitere geeignete Komponenten für einen Komplexbildner der Membran für die erfindungsgemäße Brennstoffzelle sind die Kronenether. Als Kronenether bezeichnet man planare makrocyclische Polyether, deren Sauerstoffatome insbesondere durch Ethylen-Brücken verbunden sind. Häufig sind auch Benzol- oder Cyclohexanringe ankondensiert. Einfache monozyklische Kronenether lassen sich einfach durch eine Umsetzung von geeigneten Polyethylenglykolen mit entsprechenden Dichloriden in einer alkalischen Tetrahydrofuranlösung herstellen.
Kronenether besitzen die Eigenschaft, sehr leicht mit Metallionen, insbesondere mit Alkali- und Erdalkaliionen, Koordinationsverbindungen einzugehen und damit Ionen zu transportieren. Die entstehenden Kronenverbindungen sind um so stabiler, je besser das Kationen in den Hohlraum des Liganden passt. Analoges gilt auch für die Kryptanden und die kryptatähnlichen Verbindungen.
Die Membran der erfindungsgemäßen Brennstoffzelle ist beispielsweise in der Lage, durch die enthaltenen Komplexbildner für Kationen diese zu binden und so den Transport von Anionen, insbesondere für Hydroxylionen, zuzulassen.

Die anspruchsgemäße Brennstoffzelle umfasst eine Anode, eine Kathode sowie eine zwischen Anode und Kathode befindliche erfindungsgemäße Membran. Die Membran ist insbesondere anionenleitend. Die Membran enthält Komplexbildner für Kationen. Der Einsatz einer solchen Membran lässt einen Ionentransport von Anionen, beispielsweise von O²⁻-Ionen oder Hydroxylionen durch die Membran zu, verhindert aber den Transport von Kationen, z. B. Protonen.

Komplexbildner sind Verbindungen, die mit Metallionen, insbesondere mit Alkali- und Erdalkaliionen zur Komplexbildung befähigt sind. Vorteilhafte Komplexbildner für Kationen, die in der Lage sind, diese komplex zu binden, sind z. B. Kronenether, Kryptanden oder kryptatähnliche Verbindungen.

Bei dem anspruchsgemäßen Verfahren zum Betreiben einer Brennstoffzelle nach Anspruch 3 wird Methanol in einer anodischen Reaktion oxidiert und Sauerstoff in einer kathodischen Reaktion reduziert. Ein Eindringen von Methanol in den Kathodenraum wird durch die Membran unterbunden. Bei dem anspruchsgemäßen Verfahren wandern regelmäßig nur die an der Kathode entstehenden Oxidionen oder auch Hydroxylionen durch die Membran zur Anode und rekombinieren im Anodenraum mit dem Brennstoff unter Bildung von Wasser.

## Patentansprüche

1. Brennstoffzelle, umfassend eine Anode, eine Kathode, sowie eine zwischen Anode und Kathode befindliche Membran,
**dadurch gekennzeichnet,**
**dass** die Membran Komplexbildner für Kationen aufweist.

2. Brennstoffzelle, umfassend eine Anode, eine Kathode, sowie eine zwischen Anode und Kathode befindliche Membran,
**dadurch gekennzeichnet,**
**dass** die Membran mindestens eine Komponente aus der Gruppe Kronenether, Kryptate oder Kryptat-ähnliche Verbindungen auf Kohlenstoff- oder Silikon-Ringverbindungen basierend aufweist.

3. Verfahren zum Betreiben einer Brennstoffzelle nach Anspruch 1 bis 2, bei dem Methanol in einer anodischen Reaktion oxidiert und Sauerstoff in einer kathodischen Reaktion reduziert wird,
**dadurch gekennzeichnet,**
**dass** Anionen durch die Membran von der Kathode zur Anode gelangen, und so ein Eindringen von Methanol in den Kathodenraum der Brennstoffzelle unterbunden wird.

## Claims

1. Fuel cell, comprising an anode, a cathode and a membrane located between the anode and cathode,
**characterised**
**in that** the membrane exhibits complex formers for cations.

2. Fuel cell, comprising an anode, a cathode and a membrane located between the anode and cathode,
**characterised**
**in that** the membrane exhibits at least one component from the group crown ethers, cryptates or cryptate-like compounds based on carbon or silicon ring compounds.

3. Method for operating a fuel cell according to claims 1 to 2, wherein methanol is oxidised ion an anodic reaction and oxygen is reduced in a cathodic reaction,
**characterised**
**in that** anions are transferred through the membrane from the cathode to the anode, thereby preventing penetration of methanol into the cathode space of the fuel cell.

## Revendications

1. Pile à combustible, comprenant une anode, une cathode, ainsi qu'une membrane se trouvant entre l'anode et la cathode,
**caractérisée en ce que**
la membrane comporte des complexants pour des cations.

2. Pile à combustible, comprenant une anode, une cathode, ainsi qu'une membrane se trouvant entre l'anode et la cathode,
**caractérisée en ce que**
la membrane comporte au moins un composant du groupe des éthers en couronne, des cryptates ou des composés analogues aux cryptates basés sur des composés cycliques de carbone ou de silicium.

3. Procédé d'exploitation d'une pile à combustible d'après les revendications 1 à 2, dans lequel du méthanol est oxydé dans une réaction anodique et de l'oxygène est réduit dans une réaction cathodique,
**caractérisé en ce que**
des anions accèdent à travers la membrane de la cathode à l'anode et **en ce qu'**une intrusion de méthanol dans l'espace cathodique de la pile à combustible est ainsi empêchée.
